# EUROPEAN PATENT APPLICATION

(11) **EP 1 808 923 A1**
(43) Date of publication of application: **18.07.2007**
(21) Application number: 05785652.8
(22) Date of filing: 22.09.2005
(51) Int. Cl.: H01M 8/04, F17C 11/00

(54) **METHOD OF USING HYDROGEN STORAGE TANK AND HYDROGEN STORAGE TANK**

(30) Priority: 27.09.2004 JP 2004280120
(71) Applicant: KABUSHIKI KAISHA TOYOTA JIDOSHOKKI, Kariya-shi, Aichi 448-8671 (JP); TOYOTA JIDOSHA KABUSHIKI KAISHA, Toyota-shi, Aichi-ken, 471-8571 (JP)
(72) Inventor: KIMBARA, Masahiko, a-cho, Kariya-shi, Aichi 4488671; (JP); MORI, Daigoro, , Toyota-shi, Aichi 4718571; (JP)
(74) Representative: TBK-Patent
(86) International application number: PCT/JP2005/017489
(87) International publication number: WO 2006/035672

(57) **Abstract**

A fuel cell system supplies hydrogen to a fuel cell from a hydrogen storage tank in which a hydrogen absorption alloy is incorporated, and uses a heat medium that has cooled the fuel cell to heat the hydrogen absorption alloy when hydrogen is released from the hydrogen absorption alloy. The hydrogen storage tank is filled with hydrogen gas at a temperature which is no lower than the highest temperature reached by the heat medium at the time of steady operation of the fuel cell, and under a pressure which is no lower than the equilibrium pressure of the hydrogen absorption alloy. Hydrogen is released from the hydrogen absorption alloy at a temperature which is lower than the temperature of the hydrogen absorption alloy when the above described filling is completed.

## Description

### TECHNICAL FIELD

The present invention relates to a method of using a hydrogen storage tank and a hydrogen storage tank, and in particular, to a method of using a hydrogen storage tank, which is appropriate for fuel cell systems for supplying hydrogen to a fuel cell from a hydrogen storage tank in which a hydrogen absorption material is incorporated and heating the hydrogen absorption material using a cooling water for the fuel cell, as well as a hydrogen storage tank.

### BACKGROUND ART

Hydrogen energy has been drawing attention as a form of clean energy on par with solar heat energy. Use of a metal referred to as "hydrogen absorption alloy" has been drawing attention for storing and transporting hydrogen. This "hydrogen absorption alloy" occludes hydrogen at a certain temperature and under a certain pressure so as to become a hydride, and releases hydrogen at another temperature under a different pressure when hydrogen is necessary. Thus, hydrogen engines and fuel cell automobiles in which hydrogen is supplied using a hydrogen alloy, as well as heat pumps using a heat emission and a heat absorption when a hydrogen absorption alloy occludes or releases hydrogen have been researched.

In the case where a hydrogen absorption alloy is used in a hydrogen storage tank, the hydrogen absorption alloy is usually used in a state in which a tank having an inlet and an outlet for a hydrogen gas is filled with a powder. The hydrogen absorption alloy expands and contracts a great deal when it occludes and releases hydrogen, and therefore, even if powder having a large particle diameter is used at the time when the hydrogen storage tank is filled, the powder becomes fine in the end, after occlusion and release of hydrogen have been repeated. The hydrogen absorption alloy in powder form does not have fluidity and barely moves within the hydrogen storage tank, and therefore, when the hydrogen absorption alloy in powder form expands within the tank when hydrogen is absorbed, high and localized pressure is applied in the tank, making the life of the tank shorter. In order to prevent such pressure from being applied to the hydrogen storage tank, it is usually necessary for the hydrogen storage tank to have a void in which the volume ratio is 40% to 60% of the inside volume of the hydrogen storage tank. Those skilled in the art have so far considered this void to be a waste of space best used for absorbing hydrogen, and consider it to be a reason why the density of hydrogen stored within the hydrogen storage tank cannot be increased. In the present specification, the volume of the hydrogen absorption alloy is not based on the volume density of the hydrogen absorption alloy, but on the true density of the hydrogen absorption alloy.

In order to solve this problem, a hydrogen storage tank having a hydrogen absorption alloy and a void which is filled with hydrogen gas has been proposed (see Patent Document 1). According to this document, the pressure of the hydrogen gas with which the void is filled exceeds the plateau pressure of the hydrogen gas of the above described hydrogen absorption alloy at the temperature where the above described storage tank is placed. In addition, it is considered preferable for the pressure of the hydrogen with which the hydrogen storage tank is filled to be 25 MPa to 50 MPa.

Incidentally, the reaction when the hydrogen absorption alloy occludes hydrogen is an exothermic reaction, and the reaction when the hydrogen absorption alloy releases hydrogen is an endothermic reaction, and therefore, it is necessary to heat the hydrogen absorption alloy, in order for the hydrogen absorption alloy to release hydrogen smoothly.

In addition, there are several types of fuel cells, from among which solid polymer type fuel cells are appropriate for use for automobiles, because miniaturization and high output are required for fuel cells used for automobiles. Solid polymer type fuel cells efficiently generate electricity at a certain temperature (for example, around 80°C). The reaction when fuel cells generate electricity is an exothermic reaction, and therefore, it is necessary to cool the fuel cell, in order to prevent the temperature of the fuel cell from rising over the above described temperature when electricity is generated. Accordingly, fuel cells are provided with a cooling circuit, within which a coolant (heat medium) circulates in such a manner that the heat medium absorbs heat, cooling the fuel cell when the heat medium passes through the fuel cell, and a radiator releases heat to the outside so as to cool the heat medium when the heat medium passes through the radiator. Therefore, it becomes unnecessary to independently provide the fuel cell and the hydrogen absorption alloy with a driving system for the heat medium when the heat medium used for the fuel cell is used for heating the hydrogen absorption alloy, and thus, it becomes possible to miniaturize the system. The amount of heat medium of which the temperature becomes high that has cooled liquid the fuel cell and which is supplied to the hydrogen absorption alloy can, for example, be adjusted, and thereby, the amount of hydrogen released from the hydrogen absorption alloy can be controlled to a desired amount.
Patent Document 1: Japanese Laid-Open Patent Publication 2004-108570

### DISCLOSURE OF THE INVENTION

### PROBLEM TO BE SOLVED BY THE INVENTION

When a hydrogen storage tank is being filled with hydrogen, the hydrogen absorption alloy is cooled in order to shorten the time required for filling the tank with hydrogen, and the tank is filled with hydrogen in such a state that the temperature for filling is relatively low, that is to say, in such a state that the temperature for filling is lower than the temperature of the heat medium that has cooled the fuel cell. In terms of the properties of hydrogen absorption alloys, it is known that, when the equilibrium pressure (dissociation pressure) is denoted as P and the temperature (Kelvin temperature) is denoted as T, lnP, which is a natural logarithmic function of P, and 1/T are in a linear proportional relationship over a wide range of temperatures T, and in general, the higher the temperature is, the higher the equilibrium pressure is.

The dissociation pressure of a hydrogen absorption alloy which can be represented by the composition formula Ti_{1·2}Cri_{1·2}Mn_{0·8}, for example, is approximately 2 MPa at 10°C and approximately 12 MPa at 80°C. The hydrogen absorption alloy is filled with hydrogen under a pressure of 6 MPa, which is no lower than the dissociation pressure of the hydrogen absorption metal at 10°C. Therefore, when a fuel cell system for supplying hydrogen to a fuel cell using a hydrogen storage tank using this hydrogen absorption alloy has such a configuration that the hydrogen absorption alloy is heated using the heat medium used for cooling the fuel cell, there is a risk that the internal pressure of the hydrogen storage tank may become appropriately two times greater than the pressure under which the tank is filled with hydrogen when the circulation system of the heat medium becomes abnormal in such a state that the tank is completely filled with hydrogen or in a state close to this. When the circulation system becomes abnormal as described above, it is possible that a valve provided in the path through which the heat medium circulates may become abnormal, the sensors used for determining whether or not the hydrogen absorption alloy is heated and hydrogen is released may become abnormal, the control apparatus may run out of control, the pump driving motor may become unstoppable and the like.

The hydrogen storage tank is filled with hydrogen in such a state that, for example, the pressure of the hydrogen is controlled by a filling stand, and therefore, the pressure under which the tank is filled with hydrogen does not exceed the allowable value. In the case where the heat medium that has cooled the fuel cell keeps flowing into the hydrogen storage tank due to malfunctioning in a state where the tank is filled with hydrogen, however, most of the hydrogen absorbed in the hydrogen absorption alloy is released. In the case where the hydrogen absorption alloy occupies 50% of the inside volume of the hydrogen storage tank and the void which is filled with hydrogen occupies the remaining 50% of the inside volume of the tank, and the hydrogen absorption alloy occludes the same amount of hydrogen as is contained in the void, approximately 100% of the hydrogen that is absorbed by the hydrogen absorption alloy is released when the heat medium at 80°C keeps flowing into the tank. Thus, two times as much hydrogen as at the time of filling exists in the void, and the internal pressure of the hydrogen storage tank becomes two times higher than the pressure under which the tank is filled with hydrogen (for example, 12 MPa when the tank is filled with hydrogen under a pressure of 6 MPa).

Accordingly, in a case where the allowable pressure in the tank is set simply by multiplying the pressure under which the tank is filled with hydrogen by a coefficient when designing a hydrogen storage tank according to the prior art, it is necessary to use such a value as the above described coefficient taking a large safety margin into consideration, and as a result, a problem arises, such that more resistance to pressure than necessary is provided in the hydrogen storage tank, and reduction in the weight of the hydrogen storage tank may be hindered.

A first objective of the present invention is to provide a method of using a hydrogen storage tank whose pressure does not exceed the internal pressure of the hydrogen storage tank when the tank is filled with hydrogen, even in the case where the heat medium that has cooled the fuel cell keeps heating the hydrogen absorption alloy, and it is easy to set the allowable pressure for the hydrogen storage tank. In addition, a second objective is to provide a hydrogen storage tank which is appropriate for implementing the above described method of using a hydrogen storage tank.

### MEANS FOR SOLVING PROBLEM

In order to achieve the above described first objective, one aspect of the present invention provides a method of using a hydrogen storage tank in a fuel cell system which supplies hydrogen to a fuel cell from a hydrogen storage tank in which a hydrogen absorption material is incorporated. When hydrogen is released from the hydrogen absorption material, the fuel cell system uses a heat medium that has cooled the above described fuel cell to heat the hydrogen absorption material. The above described hydrogen storage tank is filled with a hydrogen gas at a temperature no lower than the highest temperature reached by the above described heat medium at the time of steady operation of the above the described fuel cell and under a pressure which is no lower than the equilibrium pressure of the above described hydrogen absorption material. Hydrogen is released from the above described hydrogen absorption material at a temperature which is lower than the temperature of the hydrogen absorption material at the time of completion of the above described filling. "At the time of steady operation of the fuel cell" refers to a state where the warm-up operation of the fuel cell is complete and the temperature inside the fuel cell has sufficiently risen.

According to this aspect of the present invention, the pressure within the hydrogen storage tank does not exceed the internal pressure of the hydrogen storage tank at the time when the tank is filled with hydrogen, even in the case where the circulation system of the heat medium becomes abnormal and the hydrogen absorption material keeps being heated by the heat medium that has cooled the fuel cell, in spite of the fact that it is not necessary to heat the hydrogen absorption material. Therefore, it becomes easy to set the allowable pressure for the hydrogen storage tank when a hydrogen storage tank is designed.

According to this method of using a hydrogen storage tank, the highest temperature reached by the hydrogen absorption material may be no lower than the highest temperature reached by the above described heat medium at the time of steady operation of the above described fuel cell when the temperature rises due to heat emitted from the hydrogen absorption material when the above described hydrogen storage tank is filled with a hydrogen gas. In this case, setting of the allowable pressure for the hydrogen storage tank becomes easy when designing a hydrogen storage tank where the temperature of the hydrogen absorption material rises when the hydrogen storage tank is filled with a hydrogen gas and the temperature of the hydrogen absorption material changes as a result of, for example, cooling of the cooling apparatus.

In order to achieve the above described second objective, another aspect of the present invention provides a hydrogen storage tank in which a hydrogen absorption material is contained and which has a flow path for a heat medium for exchanging heat with the above described hydrogen absorption material as a hydrogen storage tank which is filled with hydrogen under pressure which is no lower than the equilibrium pressure of the above described hydrogen absorption material at the highest temperature of the heat medium when used in such a state that the heat medium that has cooled the fuel cell flows through the above described flow path.

According to this aspect of the present invention, in a case where a hydrogen storage tank is used in a fuel cell system which supplies hydrogen to a fuel cell and uses the heat medium that has cooled the above described fuel cell for heating the hydrogen absorption material when hydrogen is released from the above described hydrogen absorption material, the internal pressure of the hydrogen storage tank does not exceed the pressure when the tank is filled with hydrogen, even when the heat medium that has cooled the fuel cell keeps being supplied to the hydrogen storage tank in such a state that the hydrogen in the hydrogen storage tank is not supplied to the fuel cell. Accordingly, the setting of the allowable pressure in the hydrogen storage tank becomes easy when designing a hydrogen storage tank.

In this hydrogen storage tank, the above described hydrogen absorption material may be a hydrogen absorption material where the equilibrium pressure at the temperature at the time of the above described filling is substantially equal to the pressure of hydrogen at the time of filling. When the equilibrium pressure (dissociation pressure) is denoted as P and the temperature (Kelvin temperature) is denoted as T, lnP and 1/T are in a linear proportional relationship in the hydrogen absorption alloy. Accordingly, in a case where the equilibrium pressure at the temperature at the time of the above described filling (for example, 80°C) is substantially equal to the pressure at the time of filling, the internal pressure of the hydrogen storage tank becomes, for example, approximately 0.5 MPa at low temperatures of approximately - 10°C to -30°C, and hydrogen can be supplied to the fuel cell without applying pressure.

In addition, the equilibrium pressure of the hydrogen absorption material at 80°C may be 35 MPa to 40 MPa. Furthermore, the fuel cell in the above described method of using a hydrogen storage tank and hydrogen storage tank may be used as a drive source for a vehicle.

### BRIEF DESCRIPTION OF THE DRAWINGS

Fig. 1 is a diagram showing the configuration of a fuel cell system according to one embodiment of the present invention;
Fig. 2 is a graph showing the relationship between the equilibrium pressure and the temperature in a hydrogen absorption alloy; and
Fig. 3 is a diagram showing the configuration of another example of the fuel cell system.

### BEST MODE FOR CARRYING OUT THE INVENTION

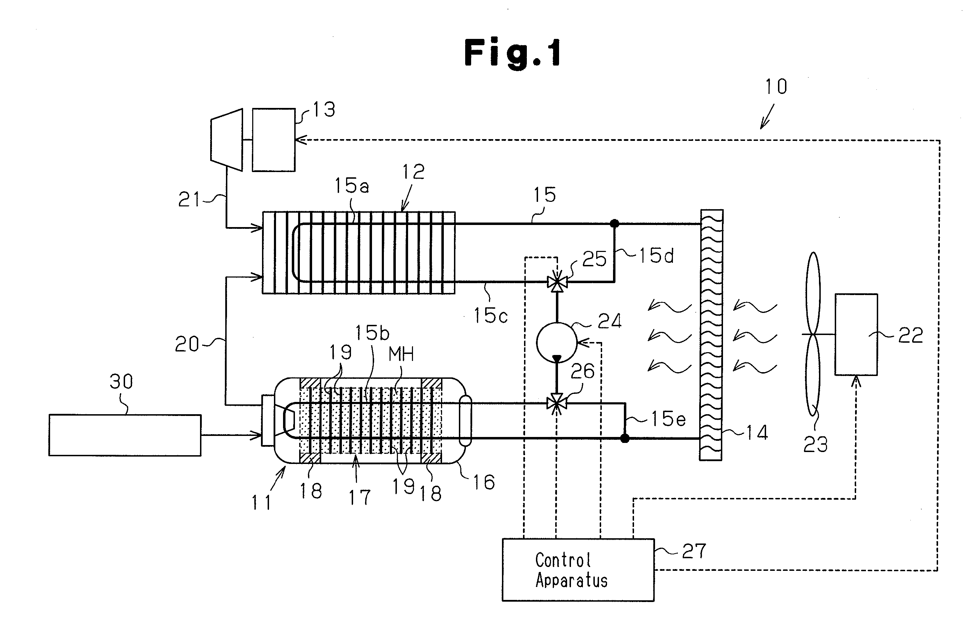

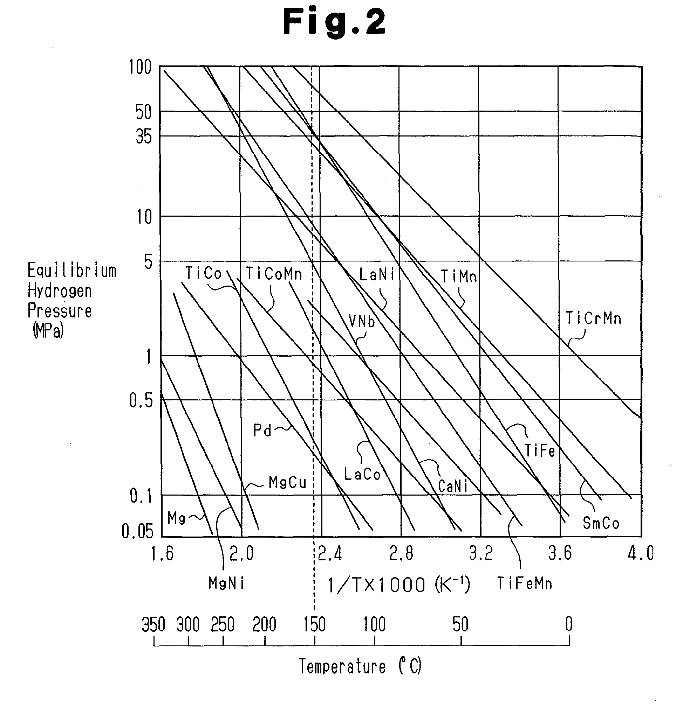

In the following, one embodiment of the present invention in a fuel cell system for an electric automobile using a fuel cell as the drive source is described with reference to Figs. 1 and 2. Fig. 1 is a diagram showing the configuration of a fuel cell system, and Fig. 2 is a graph showing the relationship between the logarithm of the equilibrium pressure (dissociation pressure) of a hydrogen absorption alloy and the temperature (°C) as well as that between the logarithm of the equilibrium pressure of a hydrogen absorption alloy and the reciprocal of the temperature (Kelvin temperature).

A fuel cell system 10 is provided with a hydrogen storage tank 11, a fuel cell 12, a compressor 13 and a radiator 14. The hydrogen storage tank 11, the fuel cell 12 and the radiator 14 are connected via a heat medium flow path 15.

The fuel cell 12 is, for example, a solid polymer fuel cell which generates a direct current electrical energy (direct current power) through the reaction between hydrogen supplied from the hydrogen storage tank 11 and oxygen in the air supplied from the compressor 13. The fuel cell 12 is cooled at the time of steady operation of the fuel cell 12, and therefore, a portion of said heat medium flow path 15 is placed within the fuel cell 12 as a heat exchanging portion 15a.

The hydrogen storage tank 11 is provided with a tank 16, a hydrogen absorption unit 17 and supports 18. A hydrogen absorption alloy MH is contained inside the hydrogen absorption unit 17 as a hydrogen absorption material. This hydrogen absorption alloy MH may be any known material, and it is preferable for the equilibrium pressure (dissociation pressure) thereof to be greater than the atmospheric pressure at a low temperature of -30°C. In this embodiment, a TiCrMn based hydrogen absorption alloy that can be represented by the composition formula Ti_{1.2}Cr_{1.2}Mn_{0.8} is used. The supports 18 support the hydrogen absorption unit 17 within the tank 16. A portion of the above described heat medium flow path 15 is placed within the hydrogen storage tank 11 as a heat exchanging portion 15b, and the heat exchanging portion 15b forms a flow path for the heat medium, which exchanges heat with the hydrogen absorption alloy MH. In this embodiment, an LLC (long life coolant) is used as the heat medium. A large number of fins 19 are provided around the heat exchanging portion 15b, and each fin 19 enhances the efficiency of heat exchange between the hydrogen absorption alloy MH and the heat medium.

The hydrogen storage tank 11 is connected to a hydrogen supply port (not shown) of the fuel cell 12 via a pipe 20 so that hydrogen can be supplied to the fuel cell 12. The hydrogen storage tank 11 stores hydrogen under a high pressure of, for example, approximately 35 MPa, and hydrogen is supplied to the fuel cell 12 in such a state that the pressure is reduced to a certain level (for example, approximately 0.3 MPa) using a valve (not shown).

The compressor 13 is connected to an oxygen supplying port (not shown) of the fuel cell 12 via a pipe 21 so that compressed air is supplied to the fuel cell 12. Air is compressed by the compressor 13 after dust and the like are removed using an air cleaner (not shown), and then discharged into the pipe 21.

The radiator 14 is provided with a fan 23 which is rotated by a motor 22 so as to enhance the efficiency of heat release from the radiator 14.

The heat medium flow path 15 is provided with a pump 24 for sending the heat medium from the fuel cell 12 to the hydrogen storage tank 11 in the middle of the connection portion 15c for connecting the outlet of the heat exchanging portion 15a and the inlet of the heat exchanging portion 15b. The heat medium flow path 15 between the fuel cell 12 and the radiator 14 and the connection portion 15c between the pump 24 and the heat exchanging portion 15a are connected through a bypass flow path 15d. The connection portion between the connection portion 15c and the bypass flow path 15d is provided with an electromagnetic three-way valve 25.

The heat medium flow path 15 between the hydrogen storage tank 11 and the radiator 14 and the connection portion 15c between the pump 24 and the heat exchanging portion 15b are connected through a bypass flow path 15e. The connection portion between the connection portion 15c and the bypass flow path 15e is provided with an electromagnetic three-way valve 26.

The above described compressor 13, motor 22, pump 24, and electromagnetic three-way valves 25 and 26 are driven or controlled for switching by means of an instruction from a control apparatus 27. The pump 24 drives and stops and changes the flow rate of the heat medium on the basis of an instruction signal from the control apparatus 27. A detection signal from a temperature sensor (not shown) for detecting the temperature of the fuel cell 12 and a detection signal from a pressure sensor (not shown) for detecting the pressure within the hydrogen storage tank 11 are input into the control apparatus 27.

Next, the operation of the apparatus formed as described above will be described.

In the case where the environmental temperature is no lower than the set temperature, which is a temperature at which the fuel cell 12 is able to generate electricity, the fuel cell 12 operates steadily. The fuel cell 12 operates steadily under the control of the control apparatus 27, on the basis of the detection signal from the temperature sensor (not shown) for measuring the environmental temperature, in such a manner that steady operation starts at the time of startup of the fuel cell 12 in the case where the environmental temperature is no lower than the above described set temperature and after the warm up operation of the fuel cell 12 in the case where the environmental temperature is lower than the set temperature.

When the fuel cell 12 operates steadily, hydrogen is supplied from the hydrogen storage tank 11 to the anode electrode of the fuel cell 12. In addition, the compressor 13 is driven, so that air having a predetermined pressure is applied is supplied to the cathode electrode of the fuel cell 12.

The chemical reaction between hydrogen and oxygen is an exothermic reaction. Therefore, solid polymer type fuel cells generate electricity efficiently at approximately 80°C, and when electricity is continuously generated, the temperature of the fuel cell 12 rises, due to the heat caused by the reaction between hydrogen and oxygen, over the approximately 80°C, which is a temperature appropriate for generation of electricity. In order to prevent the temperature from rising, the heat medium that is cooled in the radiator 14 circulates through the heat medium flow path 15. In addition, the reaction of hydrogen being released from the hydrogen absorption alloy MH is an endothermic reaction. Therefore, it is necessary for the hydrogen absorption alloy MH to be heated, in order for hydrogen to be released smoothly, and the heat medium, which is warm after the fuel cell 12 is cooled, is used to heat the hydrogen absorption alloy MH.

When the fuel cell 12 operates, the control apparatus 27 outputs an instruction signal so that the setting of the electromagnetic three-way valve 25 is held in such a state that the heat medium flows through the connection portion 15c instead of the bypass flow path 15d, that is to say, such a state that the heat medium that is discharged from the radiator 14 flows through the heat exchanging portion 15a of the fuel cell 12. In addition, the control apparatus 27 outputs an instruction signal so that the setting of the electromagnetic three-way valve 26 is switched between a state where the heat medium is supplied to the hydrogen storage tank 11 and a state where the heat medium is not supplied to the hydrogen storage tank 11 but flows through the bypass flow path 15e to the radiator 14 on the basis of the detection signal from the pressure sensor for detecting the pressure within the hydrogen storage tank 11.

When the hydrogen storage tank 11 is filled with (stores) a hydrogen gas, that is to say, when a hydrogen gas is absorbed by the hydrogen absorption alloy MH, the hydrogen storage tank 11 is connected to a hydrogen filling pipe of a hydrogen cylinder 30, which is a hydrogen supplying portion, via a coupler (not shown) by switching a valve. Thus, the hydrogen storage tank 11 is filled with a hydrogen gas due to the difference in pressure between the hydrogen cylinder 30 and the hydrogen storage tank 11.

The hydrogen absorption alloy MH becomes a hydride when it reacts with a hydrogen gas supplied from the hydrogen cylinder 30 into the hydrogen storage tank 11, and thus, the hydrogen gas supplied into the hydrogen storage tank 11 is absorbed by the hydrogen absorption alloy MH. The reaction of occlusion of hydrogen is an exothermic reaction, and therefore, it is necessary to remove heat generated in the reaction from the hydrogen absorption alloy MH in order for the reaction of occlusion of hydrogen to progress smoothly. Therefore, the setting of the electromagnetic three-way valves 25 and 26 is switched when the tank is filled with a hydrogen gas, so that the heat medium flowing through the heat medium flow path 15 does not flow through the fuel cell 12 or the bypass flow path 15e but passes through the bypass flow path 15d, the connection portion 15c and the heat exchanging portion 15b so as to circulate through the hydrogen storage tank 11 and radiator 14.

In this embodiment, the tank is filled with a hydrogen gas under such conditions that the temperature when filling of the tank with the hydrogen gas is completed is no lower than the highest temperature reached by the heat medium when the fuel cell 12 steadily operates. Concretely, the above described highest temperature is 80°C, and thus, the tank is filled with the hydrogen gas under such conditions that the temperature when filling of the tank with the hydrogen gas is completed is no lower than 80°C. Furthermore, the equilibrium pressure of the hydrogen absorption alloy MH at a temperature of no higher than 100°C is no higher than 10 MPa, and the tank is filled with the hydrogen gas under a pressure of no lower than the equilibrium pressure of the hydrogen absorption alloy MH at the temperature at which the tank is filled with the hydrogen gas. Concretely, the hydrogen storage tank 11 is filled with a hydrogen gas having a predetermined pressure (for example, 35 MPa) in such a state that the tank is completely filled with hydrogen.

In order for the hydrogen absorption alloy MH to occlude the hydrogen gas smoothly, the heat medium that has been cooled in the radiator 14 circulates through the heat medium flow path 15 so as to cool the hydrogen absorption alloy MH within the hydrogen storage tank 11. In the case where the tank is filled with the hydrogen gas in short period of time, the temperature within the hydrogen storage tank 11 easily reaches a level of no lower than 80°C, which is the temperature of the heat medium that has cooled the fuel cell 12 at the time of steady operation, due to the heat generated in the hydrogen absorption alloy MH. In addition, the amount of heat medium which flows through the heat exchanging portion 15b in the hydrogen storage tank 11 per unit time and the quantity of air supplied by the fan 23 are adjusted, and thereby, the temperature within the hydrogen storage tank 11 is adjusted to a predetermined temperature (for example, 100°C) which is no lower than the highest temperature of the heat medium at the time of steady operation of the fuel cell 12, and thus, the tank is completely filled with the hydrogen gas. Filling of the tank with the hydrogen gas is completed at the point in time when the pressure within the hydrogen storage tank 11 reaches 35 MPa.

In the case where a hydrogen gas is supplied to the fuel cell 12, the hydrogen storage tank 11 supplies hydrogen to the fuel cell 12 after hydrogen which exists within the void in the hydrogen storage tank 11 is adjusted to a certain pressure using a pressure reducing valve (not shown). When the pressure within the hydrogen storage tank 11 becomes equal to or lower than a first set pressure that has been preset, the control apparatus 27 outputs an instruction signal so that the setting of the electromagnetic three-way valve 26 is switched to such a state that the heat medium heats the hydrogen storage tank 11, that is to say, such a state that the heat medium flows through the heat exchanging portion 15b. In addition, when the pressure within the hydrogen storage tank 11 becomes equal to or higher than a second set pressure that has been preset, the control apparatus 27 outputs an instruction signal so that the setting of the electromagnetic three-way valve 26 is switched to such a state that the heat medium does not flow through the hydrogen storage tank 11.

The hydrogen gas is supplied from the hydrogen storage tank 11 to the fuel cell 12 at a temperature which is lower than the temperature when filling of the tank with the hydrogen gas is completed. Accordingly, hydrogen is not released from the hydrogen absorption alloy MH until the pressure of the hydrogen which fills the void within the hydrogen storage tank 11 becomes lower than the equilibrium pressure of the hydrogen absorption alloy MH at the above described temperature, and the hydrogen filled in the void is supplied to the fuel cell 12. As shown in Fig. 2, in the case where the temperature of the external environment corresponding to the temperature of the hydrogen storage tank 11 is, for example, 30°C, the equilibrium pressure is approximately 3.5 MPa. In addition, in the case where the pressure of the hydrogen to be supplied to the fuel cell 12 is less than this equilibrium pressure, the hydrogen gas filling the void is supplied to the fuel cell 12 via a pressure reducing valve. In addition, no hydrogen is absorbed or released during this time, and therefore, it is unnecessary to heat or cool the hydrogen absorption alloy MH, and the setting of the electromagnetic three-way valves 25 and 26 is switched to such a state that the heat medium within the heat medium flow path 15 does not pass through the heat exchanging portion 15b.

When the pressure within the hydrogen storage tank 11 becomes lower than the equilibrium pressure, hydrogen is released from the hydrogen absorption alloy MH. In addition, the reaction of hydrogen being released is an endothermic reaction where the reaction does not progress smoothly without heating, and therefore, it is necessary to apply heat to the hydrogen storage tank 11. The control apparatus 27 switches the setting of the electromagnetic three-way valves 25 and 26 between the different states, whether or not the heat medium flows through the hydrogen storage tank 11, so that the pressure within the hydrogen storage tank 11 is maintained between the above described first set pressure and the second set pressure.

The control apparatus 27 determines it necessary for the tank to be filled with hydrogen when the pressure within the hydrogen storage tank 11 does not reach the first set pressure even after heating by the heat medium continues for a predetermined time that has been preset in advance. Thus, the control apparatus 27 drives alerting means (for example, an indicator such as a lamp).

The hydrogen absorption alloy MH keeps releasing absorbed hydrogen unless necessary heat is supplied in a state where the pressure is lower than the equilibrium pressure. In addition, the hydrogen storage tank 11 is provided with a heat exchanging portion 15b of the heat medium flow path 15, which is the flow path for the heat medium, for heating the hydrogen absorption alloy MH when hydrogen is released. Accordingly, when the heat medium that has cooled the fuel cell 12 keeps flowing through the hydrogen storage tank 11 due to malfunctioning of the electromagnetic three-way valves 25 and 26 in such a state that the tank is completely filled with a hydrogen gas or in a state close to this, in some cases the pressure within the hydrogen storage tank 11 becomes two or more times higher than the pressure of the hydrogen gas with which the tank is completely filled.

Accordingly, in the case where the allowable pressure for the tank is set simply by multiplying the pressure under which the tank is filled with hydrogen by a coefficient when a hydrogen storage tank 11 is designed according to the prior art, it is necessary to use such a value as the above described coefficient taking a large safety margin into consideration, and thus, the hydrogen storage tank is provided with more resistance to pressure than necessary and reduction in the weight of the hydrogen storage tank is hindered. In this embodiment, however, the pressure within the hydrogen storage tank 11 does not exceed the internal pressure of the hydrogen storage tank 11 when filled with hydrogen, even in the case where the electromagnetic three-way valve 26 becomes abnormal or the control apparatus 27 becomes abnormal, and thus, the heat medium that has cooled the fuel cell 12 keeps heating the hydrogen absorption alloy MH.

This embodiment has the following advantages.
(1) Hydrogen is supplied to the fuel cell 12 from the hydrogen absorption alloy MH which is incorporated in the hydrogen storage tank 11, and the heat medium that has cooled the fuel cell 12 is used to heat the hydrogen absorption alloy MH. Then, the hydrogen storage tank 11 is filled with hydrogen at a temperature that is no lower than the highest temperature of the heat medium that has cooled the fuel cell 12 and under pressure that is no lower than the equilibrium pressure of the hydrogen absorption alloy MH at this temperature, and hydrogen is released at a temperature that is lower than the above described temperature at the time of filling. Accordingly, in spite of the fact that it is unnecessary to heat the hydrogen absorption alloy MH, the pressure within the hydrogen storage tank 11 does not exceed the internal pressure of the hydrogen storage tank 11 at the time of filling of the tank with hydrogen, even when the circulation system of the heat medium becomes abnormal and the hydrogen absorption alloy MH keeps being heated by the heat medium that has cooled the fuel cell 12. Therefore, it becomes easy to set the allowable pressure as described above when designing the hydrogen storage tank 11.
(2) In a case where the hydrogen absorption alloy MH is filled with a hydrogen gas at a temperature which is substantially the same as the outside temperature, it is necessary for the temperature of the heat medium for cooling the hydrogen absorption alloy MH to be lower than the outside temperature. Therefore, additional means for cooling the heat medium becomes necessary because the configuration for sending air from the outside to the radiator 14 is not sufficient to cool the heat medium, so that the temperature of the heat medium becomes lower than the outside temperature. In the present embodiment, however, the temperature at which the tank is filled with a hydrogen gas is no lower than the highest temperature of the heat medium that has cooled the fuel cell 12, and therefore, the temperature of the heat medium may be higher than the outside temperature, and thus, the heat coolant can be cooled in the radiator 14, to which air is sent from the outside.
(3) In the present embodiment, as the hydrogen absorption alloy MH contained in the hydrogen storage tank 11, a TiCrMn based hydrogen absorption alloy that can be represented by the composition formula Ti_{1.2}Cr_{1.2}Mn_{0.8} is used. Accordingly, as shown in Fig. 2, the equilibrium pressure of the TiCrMn based hydrogen absorption alloy is no less than 1 MPa at 0°C, and therefore, the temperature range within which hydrogen can be released from the hydrogen absorption alloy without heating the hydrogen absorption alloy is wide.

The present invention is not limited to the above described embodiment, but may be modified as follows.

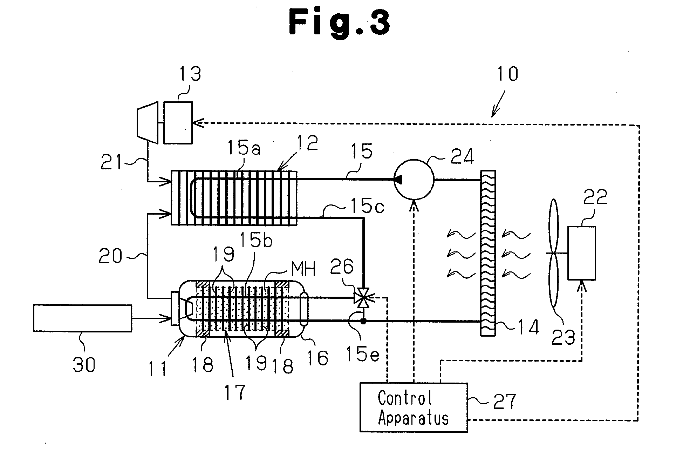

The fuel battery system 10 may have any configuration as long as it allows the heat medium that has cooled the fuel cell 12 to be used to heat the hydrogen storage tank 11, and thus, does not need to have a configuration which allows for switching between a state where the heat medium is supplied to the heat exchanging portion 15b in the hydrogen storage tank 11 through the heat exchanging portion 15a within the fuel cell 12 and a state where the heat medium is supplied to the heat exchanging portion 15b without passing through the heat exchanging portion 15a. The above described bypass flow path 15d, for example, may be omitted, and instead, as shown in Fig. 3, a pump 24 may be provided upstream from the heat exchanging portion 15a. In this case, switching control of the electromagnetic three-way valve 26 allows switching between a state where the heat medium that passes through the heat exchanging portion 15a is supplied to the heat exchanging portion 15b of the hydrogen storage tank 11 and a state where the heat medium is directly supplied to the radiator 14. Accordingly, only the heat medium that passes through the heat exchanging portion 15a of the fuel cell 12 is supplied to the heat exchanging portion 15b of the hydrogen storage tank 11, and the heat medium is supplied to the heat exchanging 15b in a state where the fuel cell 12 is not operating at the time of filling of the tank with hydrogen, and therefore, cooling of the hydrogen absorption alloy MH is not hindered. In this case, the electromagnetic three-way valve 25 is omitted, and therefore, the configuration of the circulation system of the heat medium can be simplified.

The configuration of the fuel cell system 10 is not limited to one where a hydrogen gas supplied from the hydrogen storage tank 11 is supplied directly to the fuel cell 12, and may be a configuration where a hydrogen gas supplied from the hydrogen storage tank 11 is supplied to the fuel cell 12 after a predetermined pressure has been applied by a compressor. In this case, a hydrogen gas can be supplied smoothly to the fuel cell 12 until the pressure of the hydrogen gas within the hydrogen storage tank 11 becomes substantially the same as the atmospheric pressure, and the time period until the next filling can be made longer for the same amount of filling (volume).

The hydrogen absorption alloy MH may be a hydrogen absorption alloy of which the equilibrium pressure at the temperature when the tank is filled with hydrogen is substantially the same as the pressure at the time of filling. In this case, the amount of hydrogen stored in the hydrogen storage tank 11 in such a state that the hydrogen storage tank 11 is completely filled with hydrogen becomes large, in comparison with a case where the equilibrium pressure of the hydrogen absorption alloy MH at the temperature when the tank is filled with hydrogen (for example, 80°C) is significantly lower (for example, less than 1/10) than the pressure at the time of filling. This is because the amount of hydrogen stored in the hydrogen storage tank 11 becomes the sum of the amount absorbed in the hydrogen absorption alloy and the amount stored in the void. In addition, the temperature increases when a high pressure for filling is applied to the hydrogen absorption alloy MH having a low equilibrium pressure at the temperature when the tank is filled with hydrogen, and the amount of hydrogen under the high pressure under with which the tank is filled, is, in general, inversely proportional to the temperature, and therefore, the higher the temperature is, the smaller the amount of hydrogen filled with the tank. In addition, when the equilibrium pressure (dissociation pressure) of the hydrogen absorption alloy is denoted as P and the temperature (Kelvin temperature) is denoted as T, InP and 1/T are in a linear proportional relationship. In addition, in the case where the equilibrium pressure at the temperature when the tank is filled with hydrogen (for example, 80°C) is substantially equal to the pressure at the time of filling, the internal pressure of the hydrogen storage tank becomes no lower than 0.5 MPa at, for example, approximately 0°C, and thus, the temperature range within which hydrogen can be supplied to the fuel cell without applying pressure becomes wider.

A hydrogen absorption alloy of which the equilibrium pressure at 80°C is 35 MPa to 40 MPa may be used as the hydrogen absorption alloy MH. At present, there are methods which make it possible to fill a high pressure tank with a hydrogen gas at 35 MPa at hydrogen stations where high pressure tanks are filled with hydrogen gas without using a hydrogen absorption alloy, and some places put these into practice. In this case, filling with hydrogen can be completed at 80°C or higher and under 35 MPa or higher when the hydrogen storage tank is used in a fuel cell system mounted in an automobile, and this method can be easily put into practice as a method for filling a tank with hydrogen at currently existing hydrogen stations.

The fuel cell 12 is not limited to a solid polymer type fuel cell, and may be a fuel cell which uses a heat medium to cool the fuel cell, such as a phosphoric acid type fuel cell or an alkaline type fuel cell.

The configuration of the fuel cell system 10 is not limited to one where one fuel cell 12 and one hydrogen storage tank 11 are connected, and may, for example, be a configuration where hydrogen is supplied from a number of hydrogen storage tanks 11 to one fuel cell 12.

The fuel cell system 10 does not need to be used for automobiles. The fuel cell system 10 may, for example, be applied to a fuel system for vehicles other than automobiles or cogeneration systems for home use. In the case where the fuel cell system 10 is applied to a cogeneration system for home use, it may have such a configuration that the hydrogen storage tank 11 installed at home is filled with hydrogen, in addition to a configuration where a used hydrogen storage tank is exchanged with a hydrogen storage tank which is completely filled with hydrogen by a gas company, for example LP gas, as currently used.

The hydrogen storage tank 11 may contain a hydrogen absorption material other than a hydrogen absorption alloy, for example activated carbon fibers or single layer carbon nanotubes.

## Claims

1. A method of using a hydrogen storage tank in a fuel cell system which supplies hydrogen to a fuel cell from a hydrogen storage tank in which a hydrogen absorption material is incorporated, wherein, when hydrogen is released from said hydrogen absorption material, the fuel cell system uses a heat medium that has cooled said fuel cell to heat the hydrogen absorption material,
the method being **characterized in that** said hydrogen storage tank is filled with hydrogen gas at a temperature no lower than the highest temperature reached by said heat medium at the time of steady operation of said fuel cell and under pressure which is no lower than the equilibrium pressure of said hydrogen absorption material, and hydrogen is released from said hydrogen absorption material at a temperature which is lower than the temperature of the hydrogen absorption material at the time of completion of said filling.

2. The method of using a hydrogen storage tank according to claim 1, wherein the highest temperature reached by the hydrogen absorption material is no lower than the highest temperature that is reached, during steady operation of said fuel cell, by said heat medium when the temperature is increased by heat emitted from the hydrogen absorption material as said hydrogen storage tank is filled with a hydrogen gas.

3. The method of using a hydrogen storage tank according to claim 1 or 2, wherein said fuel cell is used as a drive source for an automobile.

4. A hydrogen storage tank, in which a hydrogen absorption material is contained and which has a flow path for a heat medium for exchanging heat with said hydrogen absorption material, the hydrogen storage tank being **characterized in that** the tank is filled with hydrogen under pressure which is no lower than the equilibrium pressure of said hydrogen absorption material at the highest temperature reached by the heat medium when used in a state where the heat medium that has cooled the fuel cell flows through said flow path.

5. The hydrogen storage tank according to claim 4, wherein said hydrogen absorption material is a hydrogen absorption alloy of which the equilibrium pressure at the temperature at the time of said filling is substantially the same as the pressure of hydrogen at the time of filling.

6. The hydrogen storage tank according to claim 4, wherein the equilibrium pressure of said hydrogen absorption material is 35 MPa to 40 MPa at 80°C.

7. The hydrogen storage tank according to any one of claims 4 to 6, wherein said fuel cell is used as a drive source for an automobile.
